(19) Europäisches Patentamt
European Patent Office
Office européen des brevets

(11) **EP 1 095 902 A2**

(12) **EUROPÄISCHE PATENTANMELDUNG**

(43) Veröffentlichungstag:
02.05.2001 Patentblatt 2001/18

(51) Int. Cl.⁷: **C01B 3/36**, **C23C 8/06**

(21) Anmeldenummer: 00122770.1

(22) Anmeldetag: 19.10.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.10.1999 DE 19951519**

(71) Anmelder:
**Linde Gas Aktiengesellschaft
82049 Höllriegelskreuth (DE)**

(72) Erfinder:
• **Kleinpass, Bernd
82049 Höllriegelskreuth (DE)**
• **Strigl, Reinhard
80995 München (DE)**
• **Mahlo, Thomas
82538 Geretsried (DE)**

(54) **Verfahren zur Erzeugung von CO- und H2-haltigem Behandlungsgas für die Wärmebehandlung von metallischem Gut**

(57)    Verfahren zur Erzeugung von CO- und $H_2$-haltigem Behandlungsgas für die Wärmebehandlung, inbesondere Aufkohlung und Härtung, von metallischem Gut unter hohen Temperaturen, bei dem auf der Grundlage der katalytischen Umsetzung eines Kohlenwasserstoffgases mit Kohlendioxid das Behandlungsgas gebildet wird.

Kennzeichnend für das Verfahren ist, daß zu den Ausgangsmedien Kohlenwasserstoffgas und Kohlendioxid vor der Umsetzungsreaktion Sauerstoff hinzugefügt wird, wobei ein stöchiometrisch geeignet im Hinblick auf das gewünschte Behandlungsgas abgestimmtes Verhältnis der dann drei Ausgangsmedien eingestellt wird und wobei der Sauerstoff in einer Menge derart zugegeben wird, daß mindestens ein $O_2$- zu-$CO_2$-Verhältnis von 1 zu 4 und maximal ein $O_2$-zu-$CO_2$-Verhältnis von 1,5 zu 1 entsteht.

**EP 1 095 902 A2**

Printed by Xerox (UK) Business Services
2.16.7 (HRS)/3.6

## Beschreibung

Die Erfindung betrifft ein Verfahren zur Erzeugung von CO- und $H_2$-haltigem Behandlungsgas für die Wärmebehandlung, insbesondere Aufkohlung und Härtung, von metallischem Gut unter hohen Temperaturen (800-1100°C), bei dem auf der Grundlage der katalytischen Umsetzung eines Kohlenwasserstoffgases mit Kohlendioxid das Behandlungsgas gebildet wird.

Allgemein ist es im angesprochenen Fachgebiet bekannt, CO- und $H_2$-haltige Schutz- oder Reaktionsgase aus Luft und einem Kohlenwasserstoffgas (KW-Gas) und mittels katalytischer Umsetzung der reaktiven Bestandteile, nämlich Sauerstoff und beispielsweise Methan, zu bilden. Die typische Bildungsreaktion, die eine unvollständige Verbrennung des KW-Gases darstellt, lautet hierbei wie folgt:

$$(O_2 + 4\,N_2) + 2\,CH_4 \rightarrow 2\,CO + 4\,H_2 + 4\,N_2 = \text{Luft}$$

Diese Reaktion wird üblicherweise mit einem neben dem oder den Wärmebehandlungsöfen angeordneten oder direkt an das Ofengehäuse montierten , im Kernstück aus einem Katalysator bestehenden Gasgenerator bewerkstelligt, und das im Generator gebildete, sogenannte Endogas wird im Regelfall - gegebenenfalls noch nach einem Abkühlschritt - ohne weitere Behandlung der zugehörigen Wärmebehandlungsanlage zugeführt. Ebenso ist es bekannt, das gleiche Ausgangsgasgemisch in einer, in einer Wärmebehandlungsanlage befindlichen und auf diese Weise bereits auf ein höheres Temperaturniveau versetzten, Katalysatorretorte umzusetzen (siehe z.B. DE-OS 23 63 709 oder EP 0261 462 A2).

Außerdem ist es bekannt, CO- und $H_2$-haltige Behandlungs- oder Reaktionsgase aus Kohlendioxid und wiederum einem Kohlenwasserstoffgas (KW-Gas) zu bilden, wobei auch hier - in aller Regel - die Schutzgasbildung durch eine Katalysatoreinheit zu unterstützen ist. Typische Bildungsreaktionen für diese Atmosphärenbereitstellung auf $CO_2$-Basis lauten:

$$2\,CO_2 + 2\,CH_4 \rightarrow 4\,CO + 4\,H_2$$

$$3\,CO_2 + C_3H_8 \rightarrow 6\,CO + 4\,H_2.$$

Diese Reaktionen ergeben Atmosphären, die verglichen mit Endogas (s.o.), deutlich erhöhte Anteile an Kohlenmonoxid (CO) und keinen Stickstoffgehalt aufweisen, was speziell für Aufkohlungen besondere Vorteile - nämlich eine hohe Kohlenstoffübergangszahl und damit schnelle Prozesse - liefert. Auch bei kohlungsneutralen Prozessen resultiert im allgemeinen ein zeitlicher Vorteil, der durch die besseren Wärmeübertragungseigenschaften eines reinen CO-$H_2$-Gemisches gegenüber Atmosphären mit niedrigeren CO- und $H_2$-Gehalten begründet ist.

Besagte Bildungsreaktionen sind jedoch stark endotherm (siehe A. Jurmann, HTM 54 (1999) 1, S.26-31, insbes. S.28 f).

Der hohe Energiebedarf der Bildungsreaktionen resultiert allerdings in besonderen Schwierigkeiten bei der Realisierung entsprechender Wärmebehandlungsverfahren. Es sind nämlich von den Endogasverfahren bekannte Umsetzungsaggregate für die genannten Reaktionen nicht oder nur sehr eingeschränkt tauglich, und es sind Nachteile wie erheblich geringere Gasausbeute in Kauf zu nehmen oder besondere Maßnahmen wie eine intensivierte Katalysatorbeheizung anzuwenden (siehe obiges Zitat, S.29, rechte Spalte). Jedoch ist die Wirkung dieser Maßnahmen aufgrund der - in bekannten Systemen - begrenzten Möglichkeit zur Wärmeübertragung von der Heizung auf die Katalysatormasse beschränkt.

Andererseits sind auch praktikable $CO_2$-Verfahren bekannt, die jedoch in der Nähe der altbekannten Endogas-Verfahrensweise arbeiten, d.h. es wird ein Kohlenwasserstoffgas in erster Linie mit Luft zu einem Behandlungsgas umgebildet, wobei jedoch - unter teilweiser Ersetzung von Luft - auch $CO_2$ und/oder $O_2$ zugegeben wird (siehe DE-OS 20 00 060 oder DE 43 43 927 C1 - z.B. Ansprüche).

Die Aufgabenstellung der vorliegenden Erfindung bestand daher darin, ein Behandlungsgas-Erzeugungsverfahren auf der Basis der Umsetzung eines Kohlenwasserstoffgases mit Kohlendioxid anzugeben, das die Vorteile gerade dieses Verfahrensprinzips - wie hohe, etwa gleich große CO- und $H_2$-Gehalte in der Ergebnisatmosphäre - aufrecht erhält und das gleichzeitig, mit möglichst geringem, von üblichen Gegebenheiten im Bereich dieser Wärmebehandlungen wenig abweichendem, Aufwand praktizierbar ist.

Diese Aufgabe wird erfindungsgemäß dadurch gelöst, daß zu den Basis-Ausgangsmedien - nämlich Kohlenwasserstoffgas und Kohlendioxid - Sauerstoff unter stöchiometrisch abgestimmter Reduzierung der Kohlendioxidanteiles hinzugefügt wird, wobei der Sauerstoff in einer Menge derart zugegeben wird, daß mindestens ein $O_2$-zu-$CO_2$-Verhältnis von 1 zu 4 und maximal ein $O_2$-zu-$CO_2$-Verhältnis von 1,5 zu 1 entsteht.

Durch die relativ geringfügige und wohldosierte Zugabe von Sauerstoff kann der Energiebedarf der Behandlungsgaserzeugung überraschend deutlich reduziert und andererseits die besondere Qualität der entstehenden Atmosphäre - Aufkohlungswirkung - beibehalten werden.

Besonders vorteilhaft ist es, wenn der Sauerstoff in einer Menge derart zugegeben wird, daß mindestens ein $O_2$-zu-$CO_2$-Verhältnis von 1 zu 3 und maximal ein $O_2$-zu-$CO_2$-Verhältnis von 1 zu 1 entsteht.

Zudem kann in einer günstigen Ausgestaltung die $CO_2$- bzw. $O_2$-Zugabe geregelt in Abhängigkeit vom CO-Gehalt der Ergebnisatmosphäre ausgeführt werden. Auf diese Weise können vorteilhafte Mindest-CO-Gehalte eingehalten werden.

In jedem Falle entsteht eine stickstofffreie, hocheffektive Aufkohlungsatmosphäre mit vergleichsweise geringem Energieaufwand.

Im folgenden wird die Erfindung anhand von Ausführungsbeispielen näher erläutert.

Beispiel 1: Zur Durchführung des erfindungsgemäßen Verfahrens bzw. zur Herstellung einer erfindungsgemäßen Aufkohlungsatmosphäre werden beispielsweise Propan, Kohlendioxid und Sauerstoff in etwa gleichen Anteilen eingesetzt. Gegenüber dem bisher angewendeten Vergleichsverfahren, bei dem Propan und

Kohlendioxid zur Herstellung einer Aufkohlungsatmosphäre in einem Verhältnis von 1 zu 3 eingesetzt wurden, d.h. entsprechend

$$3\ CO_2 + C_3H_8 \rightarrow 6\ CO + 4\ H_2$$

umgesetzt wurden, konnte mit der erfindungsgemäßen Ausführung gemäß

$$CO_2 + O_2 + C_3H_8 \rightarrow 4\ CO + 4\ H_2$$

in ein und demselben, beheizten, katalytischen Gasgenerator die produzierte Spaltgasmenge um das 2,3-fache gegenüber dem Vergleichsverfahrens gesteigert bzw. - bei identischer Mengenproduktion - der Energieverbrauch um mehr als 50 % abgesenkt werden. Der Energieverbrauch ist hierbei beispielsweise am Heizregler des elektrisch beheizten Generators ablesbar.

Diese Ergebnisse sind - wie sich beim Nachvollziehen der Verhältnisse herausstellt - in guter Übereinstimmung mit energetischen Betrachtungen, die besagen, daß bei einer angenommenen Austrittstemperatur des Produktgases von 1000°C für die Umsetzung des Kohlendioxid-Propan-Systems etwa 1,14 kWh pro Norm-m$^3$ Schutzgas aufgebracht werden muß, während für die Reaktion des 3-Komponenten-Systems nur etwa 0,46 kWh pro Norm-m$^3$ zu erbringen sind. Mit anderen Worten: der wirtschaftliche Vorteil des 3-Komponenten-Systems ergibt sich daraus, daß pro Norm-m$^3$ eingesetztem Sauerstoff-Gas ohne Verlustbetrachtungen 8 x (1,14 - 0,46) kWh, also 5,44 kWh Energie eingespart werden. Erfindungsgemäß sind also insbesondere erhebliche Energieeinsparungen möglich, die gepaart mit verfahrenstechnischen Vorteilen - man hat aufgrund des dreikomponentigen Systems weitergehende Einflußmöglichkeiten auf die ablaufende Wärmebehandlung als üblich - ein insgesamt vorteilhaftes Wärmebehandlungsverfahren ergeben.

Beispiel 2: Zur Durchführung einer weiteren Variante des erfindungsgemäßen Verfahrens zur Herstellung eines CO- und H$_2$-reichen Schutzgases wird einer brennerbeheizten in-situ-Katalysator-Retorte, d.h. einer innenseitig in einem Wärmebehandlungsofen liegenden Gaserzeugungseinheit, neben Methan und Kohlendioxid auch Sauerstoff im Umfang von etwa einem Drittel bis zur Hälfte der Kohlendioxidmenge zugeführt und somit folgende Ausgangsbasis hergestellt:

$$2\ CO_2 + O_2 + 4\ CH_4 \rightarrow 6\ CO + 8\ H_2,$$

$$3\ CO_2 + O_2 + 5\ CH_4 \rightarrow 8\ CO + 10\ H_2..$$

Damit zu vergleichen ist die Verfahrensweise auf der Basis von:

$$2\ CO_2 + 2\ CH_4 \rightarrow 4\ CO + 4\ H_2.$$

Bei der eben beschriebenen Umsetzung ist der Reaktionsablauf in der angesprochenen, in der Regel röhrenförmigen und mit Brenner zentral beheizten Katalysatorretorte sehr träge und stark endotherm. Aufgrund der bei erhöhter Heizleistung auftretenden Überhitzungsgefahr am Heizstreckenende ist die erzeugbare Schutzgasmenge nur etwa 50 % von derjenigen Schutzgasmenge, die von der maximalen Brennerleistung her möglich wäre. Durch das Zuführen der beschriebenen Sauerstoffanteile zum Ausgangsgasgemisch wird eine, am Katalysator-Temperatur-Längsprofil deutlich abzulesende, Reaktionsbeschleunigung vor allem im ersten Drittel der Erwärmungszone des Katalysators bewirkt, so daß die maximal erzeugbare Schutzgasmenge ohne Überhitzung gegenüber der Verfahrensweise ohne Sauerstoff um 40 % steigerbar ist.

Im Hinblick auf den, mit dieser Verfahrensweise gestalteten Aufkohlungsprozeß ist es des weiteren beispielsweise von Vorteil, wenn hinsichtlich des CO-Gehalts des Produktgases darauf geachtet wird, daß dieser nicht unter einen bestimmten Wert, z.B. 43 %, absinkt, um den für Aufkohlungsprozesse so wichtigen Kohlenstoffübergangskoeffizienten sehr hoch zu halten.

Dazu wird z.B. das Verfahren innerhalb der angegebenen Grenzen ausgeführt, jedoch zusätzlich durch Messung des CO-Gehalts und geeignete Nachführung der CO$_2$- und/oder O$_2$-Zugabe so ausgestaltet, daß der gewünschte Wert des CO-Gehalts, der durch andere Regelungen - wie z.B. der C-Pegelregelung - etwas von der Zielgröße abgedrängt werden kann, weitestgehend beibehalten wird.

Der CO-Gehalt kann außerdem erfindungsgemäß - durch entsprechend programmgesteuerte CO$_2$-und O$_2$-Zugabe - den Bedürfnissen der jeweiligen Behandlungsstufe einer Aufkohlung günstig angepaßt werden. In diesem Sinne kann in der ersten Phase der Aufkohlung der CO-Wert zugunsten einer größtmöglichen Kohlenstoffübergangszahl möglichst nahe bei 50-Vol-% CO eingestellt werden, während gegen Ende der Aufkohlung der CO-Wert ohne negative Auswirkung auf die Prozeßzeit zugunsten einer möglichst energiesparenden Behandlungsgaserzeugung abgesenkt werden kann.

Auf diese Weisen ergeben sich, trotz Verlassen der exakt optimalen CO- und $H_2$-Anteile von jeweils 50 % in der Aufkohlungsatmosphäre, sehr effektive Aufkohlungsverfahren mit erheblichen Vorteilen hinsichtlich des Energiebedarfs und der Auslegung der Anlagentechnik.

**Patentansprüche**

1.  Verfahren zur Erzeugung von CO- und $H_2$-haltigem Behandlungsgas für die Wärmebehandlung, insbesondere Aufkohlung und Härtung, von metallischem Gut unter hohen Temperaturen, bei dem auf der Grundlage der katalytischen Umsetzung eines Kohlenwasserstoffgases mit Kohlendioxid das Behandlungsgas gebildet wird,
    **dadurch gekennzeichnet**, daß zu den Ausgangsmedien Kohlenwasserstoffgas und Kohlendioxid vor der Umsetzungsreaktion Sauerstoff hinzugefügt wird,
    wobei ein stöchiometrisch geeignet im Hinblick auf das gewünschte Behandlungsgas abgestimmtes Verhältnis der dann drei Ausgangsmedien eingestellt wird und
    wobei der Sauerstoff in einer Menge derart zugegeben wird, daß mindestens ein $O_2$- zu-$CO_2$-Verhältnis von 1 zu 4 und maximal ein $O_2$-zu-$CO_2$-Verhältnis von 1,5 zu 1 entsteht.

2.  Verfahren Anspruch 1, **dadurch gekennzeichnet**, daß Sauerstoff in einer Menge derart zugegeben wird, daß mindestens ein $O_2$- zu-$CO_2$-Verhältnis von 1 zu 3 und maximal ein $O_2$-zu-$CO_2$-Verhältnis von 1 zu 1 entsteht.

3.  Verfahren den Ansprüchen 1 oder 2, **dadurch gekennzeichnet**, daß die $CO_2$- und/oder die $O_2$-Zugabe geregelt in Abhängigkeit vom CO-Gehalt der Ergebnisatmosphäre ausgeführt wird.

4.  Verfahren den Ansprüchen 1 bis 3, **dadurch gekennzeichnet**, daß der CO-Gehalt der Ergebnisatmosphäre zumindest bei oder oberhalb eines Wertes von 40 Vol-% gehalten wird.